Europäisches Patentamt

European Patent Office

Office européen des brevets

(11) Publication number: **0 139 454**
**B1**

# (12) EUROPEAN PATENT SPECIFICATION

(45) Date of publication of patent specification: **24.08.88**

(21) Application number: **84306165.6**

(22) Date of filing: **10.09.84**

(51) Int. Cl.⁴: **B 29 D 7/00,** C 08 F 38/02,
B 32 B 27/00, H 01 B 5/14,
B 29 C 67/24, B 29 C 41/24

(54) **Apparatus for producing polyacetylene film.**

(30) Priority: **12.09.83 JP 141185/83 u**

(43) Date of publication of application:
**02.05.85 Bulletin 85/18**

(45) Publication of the grant of the patent:
**24.08.88 Bulletin 88/34**

(84) Designated Contracting States:
**DE FR GB**

(56) References cited:
EP-A-0 065 691
EP-A-0 080 065
US-A-2 607 081

CHEMICAL ABSTRACTS, vol. 94, no. 2, January
1981, page 12, no. 4403x, Columbus, Ohio, US
CHEMICAL ABSTRACTS, vol. 100, no. 6,
February 1984, page 12, no. 35014t, Columbus,
Ohio, US

(73) Proprietor: **HOXAN CORPORATION**
**2-Nishi, 1-chome Kita 3-jyo**
**Chuo-ku Sapporo-shi Hokkaido (JP)**

(72) Inventor: **Hide, Ichiro c/o Hoxan Laboratory**
**Hoxan Corporation No. 3-17, Kikusui 5-jo 2-**
**chome**
**Shiroishi-ku Sapporo (JP)**

(74) Representative: **Spencer, Graham Easdale et al**
**A.A. Thornton & CO Northumberland House**
**303-306, High Holborn**
**London WC1V 7LE (GB)**

Courier Press, Leamington Spa, England.

## Description

This invention relates to an apparatus for continuously producing a polyacetylene film utilising a Ziegler-Natta catalyst.

A polyacetylene is the most simple chain conjugated high-molecular compound which contains as ingredients carbon atoms and hydrogen atoms, and has properties as a semiconductor. A laminated polyacetylene membrane with Ziegler-Natta catalyst [$Ti(OC_4H_9)_4Al(C_2H_5)_3$ series] has a fibril (fibrous ultrafine crystal) mesh structure of approx. 200 A° in diameter. When this membrane is doped with halogen gas or arsenic pent afluoride, its conductivity can be varied greatly.

Since such a polyacetylene membrane has good chemical stability, light weight and a fibril mesh structure, resulting in a large surface area, it is already known for use as electrode material for a secondary battery or in applications for integrated circuits.

In order to produce the above described polyacetylene film, it is already known to produce polyacetylene film by a method which includes the steps of preparing a Ziegler-Natta catalyst of molar ratio of aluminum/titanium of 4 to 4, cooling the catalyst to 78°C with a refrigerant of dry ice/methanol, blowing acetylene gas onto the catalyst, thereby polymerizing the gas in the vicinity of the boundary between the vapor phase and the liquid phase at the surface of the catalyst solution.

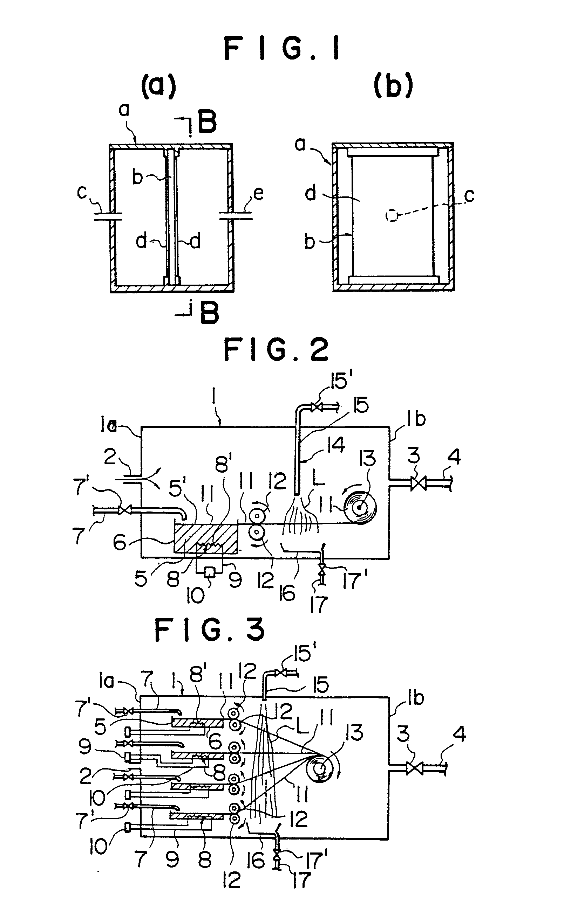

For this purpose, according to the prior art, a substrate b made, for example, of glass is contained, as shown in Fig. 1, in a vessel a. The Ziegler-Natta catalyst is coated on the surface of the substrate b, acetylene gas is introduced via supply tube c into the vessel a and onto the substrate b, thereby polymerizing to produce polyacetylene film d of the same shape as the substrate b.

Reference character e in Fig. 1 designates an acetylene gas exhaust tube.

In this known apparatus, the substrate b must however, be exchanged by opening the vessel a at intervals, and the polyacetylene film thus produced is limited in thickness and area.

Accordingly, it is an object of this invention to provide an apparatus for producing a polyacetylene film which can eliminate the aforementioned drawbacks and disadvantages and can continuously produce polyacetylene film.

According to the present invention there is provided an apparatus for producing a polyacetylene film by polymerizing acetylene gas in contact with Ziegler Natta catalyst comprising a vessel adapted to be supplied with acetylene gas, characterised in that it comprises in the vessel: a container for holding Ziegler-Natta catalyst; a pair of feed rollers disposed adjacent to said container to draw out polyacetylene film polymerized on the surface of the catalyst; a cleaning member to apply cleaning agent to the drawn polyacetylene film for removing Ziegler-Natta catalyst therefrom; and a winding unit for winding the polyacetylene film.

Embodiments of the present invention will now be more particularly described by way of example and with reference to the accompanying drawings, in which:

FIGURE 1a is a schematic vertical sectional front view showing known apparatus for producing polyacetylene film;

FIGURE 1b is a sectional view taken along the line B-B of Fig. 1a and seen in the direction of arrows B;

FIGURE 2 is a schematic view showing a first embodiment of an apparatus for producing a polyacetylene film according to the present invention; and

FIGURE 3 is a schematic view showing another embodiment of the apparatus of the invention.

The present invention will now be described in more detail with reference to the accompanying drawings.

In Fig. 2, reference numeral 1 designates a box-like, closed vessel. Acetylene gas is introduced from a supply conduit 2 connected to one side wall 1a of the vessel 1, and an exhaust conduit 4, having a control valve 3, is connected to an other side wall 1b of the vessel 1. The pressure of acetylene gas introduced into the vessel 1 is maintained constant by opening or closing of the valve 3.

The valve 3 may be a diaphragm valve which operates to open or close under a predetermined pressure, or alternatively may be a solenoid valve which is controlled to be opened or closed by a signal from a detector separately provided for detecting the pressure of the gas in the vessel 1.

A coverless container 6 for holding Ziegler Natta catalyst 5 is provided close to the supply conduit 2 into the vessel 1, and the Ziegler-Natta catalyst 5 is supplied thereto via a catalyst supply conduit 7 having a valve 7' to maintain the quantity of the catalyst constant in the container 6.

A temperature regulator 8 for regulating the temperature of the Ziegler-Natta catalyst 5 is provided in the container 6. The regulator 8 comprises a heat exchanger 8' in the container 6 and a supply source 10 for circulating and supplying heat medium or refrigerant to the heat exchanger 8' via a conduit 9.

Feed rollers 12 are provided adjacent the container 6 for drawing polyacetylene film 11 from the surface of container 6 when the polyacetylene film 11 is polymerized thereon at the boundary between an acetylene vapor phase and a liquid phase of the Ziegler-Natta catalyst 6.

A winding unit 13, such as a roller, for winding the polyacetylene film 11 is rotatably driven close to the exhaust conduit 4 in the vessel 1.

A cleaning member 14 is provided at a location between the rollers 12 and the winding unit 13 to clean the film and remove therefrom any Ziegler-Natta catalyst 5. The cleaning member 14 comprises a cleanser supply conduit 15 and a valve 15'. Cleanser L, such as toluene, is injected through the supply conduit 15, thereby cleaning the polyacetylene film 11.

The cleanser L flows into a tray 16 provided in the bottom of the vessel 1, and is exhausted externally via a conduit 17 having a valve 17'.

In operation for producing polyacetylene film using the apparatus constructed as described above, acetylene gas is introduced via the supply conduit 2 into the vessel 1 under a predetermined pressure.

The acetylene gas is polymerized by the catalyst 5 to produce a polyacetylene film 11 on the surface 5' of the Ziegler-Natta catalyst 5 in the container 6. The container 6 is preferably maintained full of the Ziegler-Natta catalyst 5.

The temperature of the Ziegler-Natta catalyst 5 is regulated to a predetermined temperature by the temperature regulator 8. The polyacetylene film 11 may be cispolyacetylene or transpolyacetylene.

This polyacetylene film 11 is drawn by a pair of feed rollers 12, wound on the winding unit 13, and the Ziegler-Natta catalyst 5 adhered to the polyacetylene film 11 is cleaned and removed by the cleanser L injected from the supply conduit 15.

Since it takes a certain amount of time to polymerize the polyacetylene film 11, the rotating speed of the rollers 12 is low and the winding unit 13 is rotatably driven at a corresponding speed. Thus, the thickness of the polyacetylene film 11 can be varied by altering the rotating speed of the feed rollers 12 and the winding unit 13, thereby producing polyacetylene film 11 for various utilities.

Fig. 3 shows another embodiment of an apparatus for producing a polyacetylene film according to the present invention.

This embodiment is different from the first embodiment of the invention in that a plurality of containers 6 for producing the film are provided at the supply conduit 2 side in a vessel 1 and a plurality of polyacetylene films 11 produced thereby are wound on a winding unit 13 in laminated state.

In Fig. 3, four containers 6 are provided at vertically separated locations, and catalyst supply conduits 7, temperature regulators 8, and feed rollers 12, are correspondingly arranged. Four layer polyacetylene films 11, are therefore wound on the winding unit 13.

Polyacetylene film 11 can be continuously produced with good productivity, and since the speed for drawing the polyacetylene film 11 may be varied the thickness of the film 11 can be regulated. Films of various sizes can be readily fabricated by mass production, thereby reducing the cost of polyacetylene film 11.

## Claims

1. An apparatus for producing a polyacetylene film by polymerizing acetylene gas in contact with Ziegler Natta catalyst comprising a vessel adapted to be supplied with acetylene gas, characterised in that it comprises in the vessel: a container (6) for holding Ziegler-Natta catalyst (5); a pair of feed rollers (12) disposed adjacent to said container (6) to draw out polyacetylene film polymerized on the surface (5') of the catalyst (5); a cleaning member (14) to apply cleaning agent to the drawn polyacetylene film for removing Ziegler-Natta catalyst therefrom; and a winding unit (13) for winding the polyacetylene film.

2. An apparatus as claimed in claim 1, further characterised by a temperature regulator (8) provided in said container (6) for regulating the temperature of the Ziegler-Natta catalyst (5).

3. An apparatus as claimed in either claim 1 or claim 2, characterised in that the vessel (1) comprises a plurality of containers (6) for producing polyacetylene films, and in that said winding unit (13) winds laminated polyacetylene film.

## Patentansprüche

1. Vorrichtung zum Herstellen eines Polyacetylenfilms durch Polymerisation von Acetylengas im Kontakt mit einem Ziegler-Natta-Katalysator, mit einem mit Acetylengas beschickbaren Gefäss, dadurch gekennzeichnet, dass sie im Gefäss: einen Behälter (6) zur Aufnahme des Ziegler-Natta-Katalysators (5), ein neben diesem Behälter (6) angeordnetes Zufuhrwalzenpaar (12) zum Ausziehen des auf der Oberfläche (5') des Katalysators (5) polymerisierten Polyacetylenfilms, ein Reinigungselement (14) zum Aufbringen von Reinigungsmittel auf den ausgezogenen Polyacetylenfilm zur Entfernung von Ziegler Natta-Katalysator von diesem und eine Wickeleinrichtung (13) zum Aufwickeln des Polyacetylenfilms enthält.

2. Vorrichtung nach Anspruch 1, gekennzeichnet ferner durch einen in besagtem Behälter (6) angeordeneten Temperaturregler (8) zur Steuerung der Temperatur des Ziegler-Natta-Katalysators.

3. Vorrichtung nach Anspruch 1 oder 2, dadurch gekennzeichnet, dass das Gefäss (1) mehrere Behälter (6) zum Herstellen von Polyacetylenfilmen enthält und dass besagte Wickeleinrichtung (13) laminierten Polyacetylenfilm aufwickelt.

## Revendications

1. Un dispositif pour produire un film de polyacétylène en polymérisant du gaz acétylène au contact d'un catalyseur de Ziegler-Natta, comprenant un récipient adapté pour être alimenté en acétylène caractérisé en ce qu'il comprend dans le récipient: un réceptacle (6) pour contenir le catalyseur de Ziegler-Natta (5); une paire de cylindres d'alimentation (12) disposés de manière adjacente audit réceptacle (6) pour étirer le film de polyacétylène polymérisé à la surface (5') du catalyseur (5); un organe de nettoyage (14) pour appliquer un agent nettoyant au film de polyacétylène étiré pour en retirer le catalyseur de Ziegler-Natta; et un poste d'enroulement (13) pour enrouler le film de polyacétylène.

2. Un dispositif selon la revendication 1, caractérisé en outre par un régulateur de la température (8) prévu dans ledit réceptacle (6) pour réguler la température du catalyseur de Ziegler-Natta (5).

3. Un dispositif selon l'une ou l'autre de la revendication 1 ou de la revendication 2, caracté risé en ce que le récipient (1) comprend une pluralité de réceptacles pour produire des films de polyacétylène et en ce que ledit dispositif d'enroulage (13) enroule du film de polyacétylène stratifié.

# F I G . I

## (a)

## (b)

# F I G . 2

# F I G . 3